# FASCICULE DE BREVET EUROPEEN

(11) **EP 3 131 702 B1**
(45) Date de publication et mention de la délivrance du brevet: **10.05.2017**
(21) Numéro de dépôt: 15742239.5
(22) Date de dépôt: 24.07.2015
(51) Int. Cl.: F16F 3/12, B29C 45/14, B23P 15/00, B29C 45/00, F16F 3/087

(54) **PROCEDE DE FABRICATION D'UNE PIECE COMPRENANT PLUSIEURS MORCEAUX RELIES ENTRE EUX**
VERFAHREN ZUR HERSTELLUNG EINER KOMPONENTE MIT EINER VIELZAHL VON MITEINANDER VERBUNDENEN TEILEN
METHOD FOR MANUFACTURING A COMPONENT COMPRISING A PLURALITY OF MUTUALLY CONNECTED PARTS

(30) Priorité: 04.08.2014 FR 1457582
(43) Date de publication de la demande: 22.02.2017
(73) Titulaire: Airbus Defence and Space SAS, 78130 Les Mureaux (FR); Etancheite et Frottement J. Massot, 28350 Saint Lubin des Joncherets (FR)
(72) Inventeur: AUBERT, Guy, 28350 Saint-Lubin-des-Joncherets (FR); DEYBER, Stéphane, 31402 Toulouse (FR)
(74) Mandataire: Cabinet Plasseraud
(86) Numéro de dépôt international: PCT/EP2015/067000
(87) Numéro de publication internationale: WO 2016/020211

(56) Documents cités:
- JP-A- S5 731 552
- US-A1- 2007 089 949
- US-A1- 2007 296 116
- US-A1- 2011 291 899
- US-B1- 6 199 801

## Description

### Domaine technique

La présente invention concerne un procédé de fabrication d'une pièce finale comprenant plusieurs matériaux. Elle concerne aussi une pièce obtenue à partir de ce procédé.

Un tel procédé permet à un utilisateur de réaliser de manière très précise une pièce comprenant plusieurs morceaux reliés entre eux, avec une haute précision de positions relatives. Le domaine de l'invention est plus particulièrement mais de manière non limitative celui de la manufacture de pièce de précision ou nécessitant une bonne reproductibilité.

### Etat de la technique antérieure

On connaît de l'état de l'art des procédés pour assembler de manière solidaire deux morceaux de manière à obtenir une pièce mécanique, dont le procédé connu de US 2007/089949 et selon le préambule de la revendication 1.

Toutefois, il est compliqué de positionner avec une grande précision ces deux morceaux l'un par rapport à l'autre.

Le but de la présente invention est de résoudre ce problème par un nouveau procédé de fabrication.

Un autre but de la présente invention est de proposer une pièce pouvant être obtenue à partir de ce procédé.

### Exposé de l'invention

Cet objectif est atteint avec un procédé de fabrication d'une pièce finale comprenant plusieurs matériaux, la pièce finale étant réalisée au moins selon les étapes suivantes :
- une insertion d'un élastomère dans au moins une cavité d'insertion d'une pièce initiale de sorte que l'élastomère soit en contact et solidaire de la pièce initiale, puis,
- une découpe de la pièce initiale en au moins deux morceaux distincts, de sorte que les au moins deux morceaux distincts sont solidaires mais ne sont pas en contact, les au moins deux morceaux distincts étant reliés entre eux par l'élastomère.

La pièce finale peut présenter au moins une cavité de jeu agencée pour, une fois la pièce initiale découpée, permettre un déplacement des deux morceaux distincts l'un par rapport à l'autre par déformation de l'élastomère. L'au moins une cavité de jeu est de préférence usinée dans la pièce initiale après l'insertion de l'élastomère.

Des couches d'élastomère peuvent être insérées dans l'au moins une cavité de jeu, chaque couche étant en contact d'un seul morceau parmi les deux morceaux distincts et étant situées entre les deux morceaux distincts. Les couches d'élastomère sont de préférence obtenues par insertion de l'élastomère dans des cavités de couches.

Chaque cavité de couche peut être reliée à une cavité d'insertion par un canal permettant un passage d'élastomère entre ces deux cavités lors de l'insertion de l'élastomère dans l'une de ces deux cavités.

Le procédé peut comprendre en outre une découpe aux interfaces entre la pièce initiale et l'élastomère. De préférence il comprend :
- la découpe aux interfaces entre la pièce initiale et l'élastomère, puis,
- la découpe dans la pièce initiale.

La découpe peut s'effectuer par électro-érosion par un fil.

De préférence la pièce initiale est formée par un matériau conducteur, par exemple métallique.

L'élastomère peut comprendre du caoutchouc naturel.

Selon l'invention, l'élastomère peut être moulé dans la pièce initiale.

De préférence l'élastomère est inséré dans au moins quatre cavités d'insertion distinctes. Toutes les surfaces des cavités d'insertion et des cavités de couche peuvent être traitées pour favoriser le lien entre l'élastomère et le ou les morceaux distincts.

Selon l'invention les cavités sont des trous usinés à travers toute la pièce initiale.

Selon une autre particularité de l'invention, il est aussi proposé une pièce finale obtenue à partir d'un procédé de fabrication selon l'invention.

Un amortisseur (obtenu par un procédé de fabrication selon l'invention ou non, car cet amortisseur peut aussi être obtenu par un autre procédé de fabrication et peut donc être revendiqué indépendamment du procédé de fabrication selon l'invention) comprend :
- un ensemble se décomposant sur trois plans superposés, dont un premier plan, un deuxième plan situé au-dessous du premier plan, et un troisième plan situé au-dessous du deuxième plan, cet ensemble comprenant :
   ∘ une plaque s'étendant dans le premier plan,
   ∘ une première plaque et une deuxième plaque s'étendant dans le deuxième plan, ces deux plaques n'étant pas en contact l'une avec l'autre, et
   ∘ une plaque s'étendant dans le troisième plan,
- quatre plots en élastomère, dont :
   ∘ un plot reliant la plaque du premier plan avec la première plaque du deuxième plan,
   ∘ un plot reliant la plaque du premier plan avec la deuxième plaque du deuxième plan,
   ∘ un plot reliant la plaque du troisième plan avec la première plaque du deuxième plan, et
   ∘ un plot reliant la plaque du troisième plan avec la deuxième plaque du deuxième plan.

La plaque du premier plan et la plaque du troisième plan peuvent être reliés par un élément de liaison s'étendant à travers le deuxième plan, cet élément de liaison s'étendant de préférence sensiblement perpendiculairement au deuxième plan. La plaque du premier plan, la plaque du troisième plan et l'élément de liaison peuvent constituer une unique pièce d'un même matériau.

L'élément de liaison peut s'étendre entre la première plaque du deuxième plan et la deuxième plaque du deuxième plan. De préférence l'élément de liaison n'est en contact avec aucun des quatre plots.

L'élément de liaison peut être recouvert :
- d'une couche d'élastomère située entre l'élément de liaison et la première plaque du deuxième plan, et
- d'une couche d'élastomère située entre l'élément de liaison et la deuxième plaque du deuxième plan.

De préférence aucune des couches d'élastomère n'est en contact d'un des quatre plots ou de la première plaque du deuxième plan ou de la deuxième plaque du deuxième plan.

En outre pour chacun des quatre plots, le volume de chaque plot peut être égal à un même volume de référence plus ou moins 1%. De plus pour chacun des quatre plots, l'aire d'un plot en contact avec une des plaques peut être égale à une même aire de référence plus ou moins 1%.

Il n'y a pas de continuité de matière entre :
- la plaque du premier plan et n'importe quelle plaque du deuxième plan, et,
- la plaque du troisième plan et n'importe quelle plaque du deuxième plan.

L'ensemble peut se décomposer en outre sur un quatrième plan d'où s'étend au moins une plaque, de sorte que :
- la plaque du quatrième plan peut être reliée avec la première plaque du deuxième plan par un premier bord qui traverse le troisième plan,
- la plaque du quatrième plan peut être reliée avec la deuxième plaque du deuxième plan par un deuxième bord qui traverse le troisième plan.

La plaque du quatrième plan, la première plaque du deuxième plan, la deuxième plaque du deuxième plan, le premier bord et le deuxième bord peuvent constituer une unique pièce d'un même matériau.

De préférence l'amortisseur peut comprendre :
- pour chaque bord parmi le premier bord et le deuxième bord respectivement une couche d'élastomère située entre ce bord et la plaque du troisième plan, et
- une couche d'élastomère située entre la plaque du quatrième plan et la plaque du troisième plan.

Les couches d'élastomère peuvent être exclusivement en contact de l'une ou l'autre des uniques pièces de manière à former une cavité de jeu entre les uniques pièces, ladite cavité de jeu étant agencée pour permettre un déplacement des uniques pièces l'une par rapport à l'autre par déformation de l'élastomère.

Chaque plaque peut être une plaque métallique, de préférence en aluminium.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre une pièce initiale vue de face après une étape de préparation de découpe,
- la figure 2 illustre la pièce initiale vue de face après une étape de découpe d'ébauchage,
- la figure 3 illustre la pièce initiale vue de face après une étape de moulage,
- la figure 4 est une vue de face d'une pièce présentant un exemple de tracés que doivent suivre les moyens de découpe lors de l'étape de découpe de finition pour obtenir une pièce finale,
- la figure 5 illustre une pièce finale vue de face en coupe,
- la figure 6 illustre la pièce finale vue en perspective,
- la figure 7 illustre un éclaté de la pièce finale.

Ces modes de réalisation étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

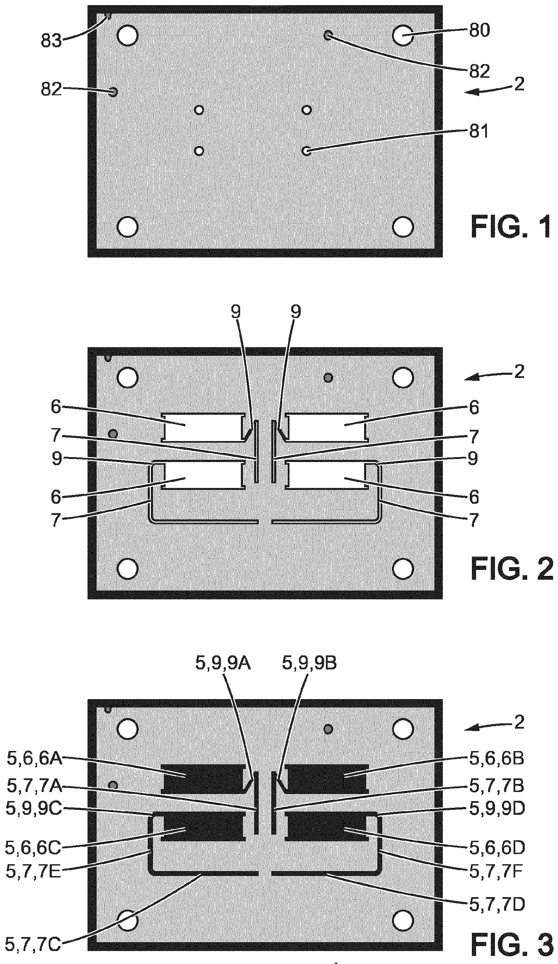

On va tout d'abord décrire, en référence aux figures 1 à 4, les différentes étapes d'un mode de réalisation d'un procédé de fabrication d'une pièce finale 1 comprenant plusieurs matériaux. Typiquement la pièce finale 1 peut comprendre plusieurs morceaux 3, 4 et 5 qui sont reliés entre eux d'un seul tenant, lesdits morceaux 3, 4 et 5 présentant des matériaux de natures différentes.

En référence aux figures 1 et 2, le procédé de fabrication commence par une étape de découpe initiale d'une pièce initiale 2. Une pièce est volontairement découpée dans un bloc brut de manière à ce que ladite pièce présente des dimensions au-dessus des cotes souhaitées. Par exemple un bloc brut peut être découpé aux dimensions suivantes : largeur 200mm, longueur 265mm et épaisseur 75mm. Puis, ladite pièce est usinée de manière précise pour obtenir la pièce initiale 2 présentant des dimensions aux cotes souhaitées et des faces opposées parfaitement parallèles entre elles. Par exemple la pièce initiale 2, usinée de manière précise, peut présenter des cotes souhaitées suivantes : largeur 179mm, longueur 259mm et épaisseur 69mm. Selon un mode de réalisation préféré, l'usinage est réalisé en partie par perçage et fraisage. Sur la figure 1, la pièce initiale 2 est de forme sensiblement rectangulaire ; elle pourrait être de forme quelconque par exemple triangulaire ou trapézoïdale.

Selon un mode de réalisation préféré, la pièce initiale 2 est formée dans un seul matériau, de préférence dans un matériau métallique, par exemple en aluminium. En particulier, la pièce initiale 2 est formée dans un matériau conducteur d'électricité, c'est-à-dire avec une conductivité électrique supérieure à 5 x 10⁶ S.m⁻¹ (Siemens par mètre).

Ensuite, différents perçages sont réalisés. La pièce initiale 2 peut présenter des perçages de positionnement 80 permettant avantageusement à la fois de positionner et de maintenir correctement la pièce initiale 2 lors des différentes étapes de découpe et de moulage au cours du procédé. De préférence, quatre perçages de positionnement 80 sont usinés respectivement aux quatre coins de la pièce initiale 2. De plus des perçages peuvent être usinés en vue de préparer les différentes étapes de découpe. Des perçages de cavité 81 sont réalisés au niveau de l'emplacement de futures cavités 6 afin de démarrer la découpe de la pièce initiale 2 et plus particulièrement permettre l'introduction de moyens de découpe par rapport à la pièce initiale 2. De préférence, un perçage de cavité 81 est usiné pour chaque cavité 6, en l'occurrence quatre perçages 81 pour découper quatre cavités 6 en référence aux figures 1 et 2. Chaque perçage 81 sert de point de départ pour chaque usinage d'une cavité 6. En outre, des perçages de dégauchissage 82 peuvent être usinés dans la pièce initiale 2. Enfin, un repère 83 peut être usiné afin de faciliter le positionnement de la pièce initiale 2 au cours des différentes étapes du procédé. Par exemple et en référence aux figures 1 à 3, le repère 83 est usiné dans un coin de la pièce initiale 2.

En référence à la figure 2, le procédé de fabrication selon l'invention prévoit une étape de découpe dite d'ébauchage de la pièce initiale 2. La pièce initiale 2 est installée sur un poste de découpe en utilisant les perçages de positionnement 80 et/ou le repère 83. De plus les perçages de positionnement 80 et/ou le repère 83 permettent également de redéfinir une origine précise géométrique de la pièce initiale 2 et même de prendre l'origine géométrique du montage en vue de la découpe d'ébauchage, de préférence par une machine. Des cavités 6, 7 et 9 sont découpées aux formes générales souhaitées dans la pièce initiale 2 mais correspondent à ce stade à des cavités 6, 7 et 9 dans l'état d'ébauche. Plus tard, une étape de découpe de finition de l'ébauchage permettra d'obtenir les formes définitives et/ou les cotes souhaitées des cavités 6, 7 et 9. Plus particulièrement, les cavités 6, 7 et 9 ne sont pas usinées aux cotes exactes souhaitées c'est-à-dire qu'elles sont découpées de manière à ce que les dimensions sont volontairement à des cotes inférieures aux cotes exactes souhaitées. Par exemple, les cavités 6 peuvent être découpées de sorte que leurs dimensions présentent par exemple un écart de 0,04 mm plus ou moins 10% par rapport à la cote exacte souhaitée. De plus, les cavités 6 sont judicieusement découpées dans un ordre précis. Ces caractéristiques ont pour avantage de contrer les éventuelles déformations de la pièce initiale 2 par libérations de contraintes dues à l'enlèvement de matière. Selon la figure 2, quatre cavités d'insertion 6, de forme rectangulaire, sont découpées en vue de recevoir par moulage un autre matériau, autre que celui de la pièce initiale 2. Un ordre de découpe des cavités 6 peut être exécuté dans un ordre dit « en croix », c'est-à-dire la cavité 6 en haut à gauche, puis la cavité 6 en bas à droite, puis la cavité 6 en haut à droite et enfin la cavité 6 en bas à gauche. En outre, des cavités de couche 7, de forme globalement rectangulaire, sont découpées en vue de recevoir un autre matériau, autre que celui de la pièce initiale 2. Chaque cavité de couche 7 est reliée à une cavité d'insertion 6 par un canal 9 permettant un passage entre ces deux cavités 6, 7 lors de l'insertion d'un autre matériau autre que celui de la pièce initiale 2 dans l'une de ces deux cavités 6, 7.

Selon un mode de réalisation préféré, les cavités d'insertion 6, les cavités de couche 7 et les canaux 9 sont remplis par un même matériau.

Selon l'invention, la pièce initiale 2 ne comporte aucune partie mobile.

Selon le mode de réalisation représenté en figure 2 les cavités 6, 7 et 9 sont des trous usinés à travers toute la pièce initiale 2, c'est-à-dire qu'ils débouchent sur deux côtés opposés de la pièce initiale 2.

Suite à l'étape de découpe dite d'ébauchage, une étape de découpe de finition de l'ébauchage permet d'usiner les cavités 6, 7 et les canaux 9 aux cotes exactes souhaitées. L'écart de cotes entre la découpe d'ébauchage et la découpe de finition de l'ébauchage est alors réduit, en l'occurrence 0,04mm dans l'exemple donné plus haut.

Selon une autre forme de réalisation, les étapes de découpe d'ébauchage et de finition de l'ébauchage peuvent être exécutées en une seule étape.

De préférence la découpe d'ébauchage s'effectue par électro-érosion par un fil. Le diamètre du fil utilisé est de 0,3mm mais peut être compris entre 0,2 et 0,4mm. De plus le fil de découpe peut être en cuivre avec gainage de protection. Cette technique a pour avantages une très bonne précision de découpe, et de découper sans effort la pièce initiale 2 ce qui permet de limiter les contraintes dans la pièce initiale 2 lors de la découpe. De même si besoin, la découpe de finition de l'ébauchage s'effectue également par électro-érosion par un fil.

Par la suite, une étape de préparation de la pièce initiale 2 est réalisée en vue de préparer le moulage d'un autre matériau, d'une autre nature que celle de la pièce initiale 2. Par exemple, un polymère synthétique et/ou naturel et plus particulièrement un élastomère 5 peut être moulé dans la pièce initiale 2. On entend par élastomère, dans ce mode de réalisation, un polymère qui possède des propriétés élastiques du caoutchouc.

Avant le moulage, un traitement de surface est réalisé afin de favoriser le lien entre les matériaux de natures différentes. Toutes les surfaces des cavités d'insertion 6 et des cavités de couche 7 sont traitées pour favoriser le lien entre l'élastomère 5 et le ou les morceaux distincts 3, 4, non distinctement visibles sur les figures 1 à 3.

Tout d'abord, les surfaces de la pièce initiale 2 sont préparées par un traitement chimique dit alodine permettant d'éviter l'oxydation des surfaces en aluminium. Selon un autre mode de réalisation, le traitement peut être un sablage des surfaces de la pièce initiale 2. Après, la pièce initiale 2 est nettoyée par la méthode dite par ultra-son puis séchée soigneusement.

Ensuite un produit adhérisant est appliqué sur toutes les surfaces intérieures des cavités 6, 7 et les canaux 9. Plus concrètement, les produits adhérisants sont dilués en respectant les proportions conseillées, notamment par rapport à la viscosité du produit obtenu en vue d'une application par un moyen d'application précis sur la pièce initiale 2. De préférence, les produits adhérisants doivent être dilués de manière à ce que la viscosité du produit adhérisant obtenu soit celle généralement conseillée pour une application sur la pièce initiale 2 :
- « au trempé », en immergeant toute la pièce 2 dans le produit, mais en protégeant éventuellement certaines parties par exemple avec une bande d'adhésif, ou
- par un pistolet à air comprimé.

Puis, la pièce initiale 2 est adhérisée « au trempé » sur toutes les surfaces des cavités d'insertion 6 et des cavités de couche 7. L'application « au trempé » a pour avantage d'être particulièrement conseillée pour envahir les interstices difficiles d'accès. Au besoin, le surplus de produit adhérisant est aspiré. Après application des produits adhérisants sur la pièce initiale 2, on laisse sécher la pièce initiale en respectant le temps de séchage conseillé. Enfin, on contrôle l'épaisseur du dépôt du ou des produits adhérisants sur la pièce initiale 2. Par exemple, on peut utiliser comme produit adhérisant des produits tels que du Chemosil™ 211 ou du Chemosil™ NL 411.

Selon d'autres formes de réalisation non-décrites par la suite, toutes les surfaces de la pièce initiale 2 sont préparées c'est-à-dire qu'elles reçoivent un traitement de surface et sont recouvertes de produit adhérisant. Cette caractéristique a pour avantage, même si une partie des surfaces de la pièce initiale 2 n'est pas en contact d'un autre matériau ou d'une autre pièce, de gagner en temps de fabrication.

Selon une autre forme de réalisation, des protections, par exemple des épargnes, résistantes aux solvants des produits adhérisants sont apposées sur les zones de la pièce initiale ne nécessitant pas d'être adhérisées.

Suivant différentes formes de réalisation, la préparation de la pièce initiale 2, en vue du moulage d'un autre matériau, peut être réalisée manuellement ou par des machines.

En référence à la figure 3, le procédé de fabrication prévoit une étape d'insertion d'un autre matériau, de nature différente de celle de la pièce initiale 2, dans les cavités 6, 7. De préférence, un élastomère 5 est inséré dans les cavités 6, 7 et les canaux 9. Plus particulièrement le procédé de fabrication prévoit que l'élastomère 5 est inséré dans au moins quatre cavités d'insertion 6 distinctes, formant des plots d'élastomères 6A, 6B, 6C et 6D. De même des couches d'élastomère 7A, 7B, 7C, 7D, 7E, 7F sont obtenues par insertion de l'élastomère 5 dans les cavités de couche 7. Enfin les canaux 9 sont remplis de portions d'élastomère 9A, 9B, 9C et 9D.

Selon un mode de réalisation préféré, l'élastomère 5 est moulé dans la pièce initiale 2. Par exemple, le moulage peut être réalisé par injection de l'élastomère 5 :
- de préférence dans au moins une cavité de couche 7, puis se répand par compression et transfert vers toutes les cavités d'insertion 6 via les canaux 9 qui communiquent entre les cavités d'insertion 6 et les cavités de couche 7, ou
- dans au moins une cavité d'insertion 6, puis se répand par compression et transfert vers toutes les cavités de couche 7 via les canaux 9 qui communiquent entre les cavités d'insertion 6 et les cavités de couche 7.

L'élastomère 5 est adhérisé sous pression (20MPa) et à température élevée (150°C à 180 °C).

De préférence, l'étape d'insertion d'un autre matériau, et plus particulièrement du moulage par injection, prévoit les sous-étapes suivantes :
- Charger un programme informatique de moulage dans une presse d'injection, monter un outillage de moulage, connecter des capteurs de pilotage et/ou de contrôle, amener l'outillage de moulage et des organes de la presse aux températures de régulation du programme,
- Réaliser un ou plusieurs moulages à blanc (pièce initiale 2 présentant au moins une cavité sans produit d'adhérisant) pour vérifier le programme,
- Préchauffer un moule à 180°C jusqu'à stabilisation de tous les organes de la presse,
- Préparer des bandes de matière d'élastomère pour l'injection, de manière à alimenter la presse d'injection en continue,
- Préchauffer la pièce initiale 2 présentant au moins une cavité 6 à 140°C pendant 15min (avec ou sans de produit adhérisant),
- Déposer la pièce initiale 2 présentant au moins une cavité 6 dans le moule, vérifier le positionnement (l'outillage est conçu pour tenir compte des différentiels de dilatation),
- Lancer le programme de moulage (condition de moulage : 30min à 180°C),
- Démouler,
- Laisser la pièce initiale 2 refroidir avec un premier palier en étuve pendant 1h à 80°C, puis 12h à température ambiante,
- Eliminer les éventuels débordements d'élastomère sur les zones de la pièce initiale non adhérisées.

En outre, l'étape de moulage peut comprendre une étape de vulcanisation.

Selon un mode de réalisation particulier, l'élastomère 5 comprend du caoutchouc naturel ou synthétique ou un élastomère de type silicone, de préférence en caoutchouc naturel.

Selon un mode de réalisation préféré, le procédé de fabrication permet de réaliser une pièce finale 1 associant un aluminium avec un mélange de caoutchouc naturel 35 ShA.

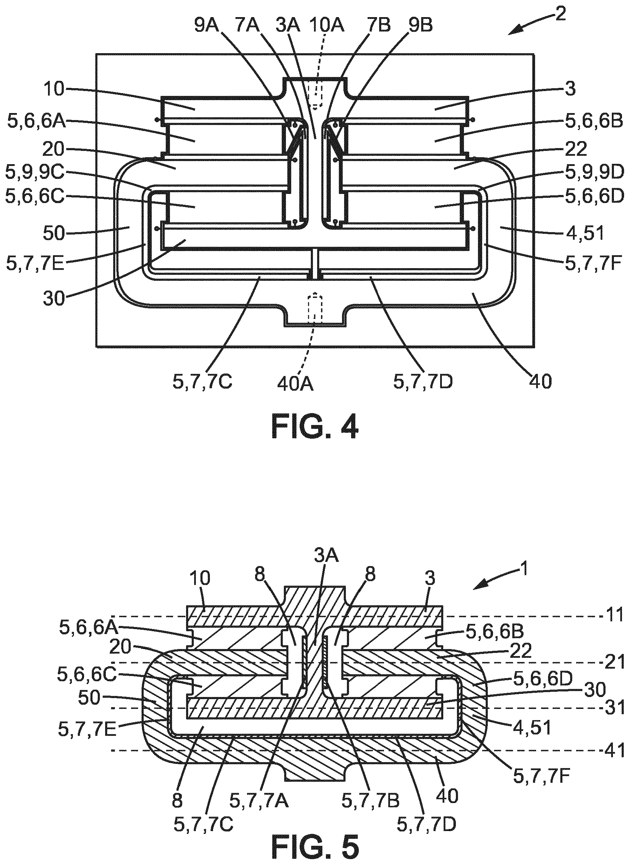

En référence à la figure 4, le procédé de fabrication prévoit une étape de découpe de finition de la pièce initiale 2 afin d'obtenir une pièce finale 1 comprenant deux morceaux 3, 4. La pièce initiale 2 est donc de nouveau placée sur un poste de découpe. De préférence, l'étape de découpe de finition prévoit les sous-étapes suivantes :
- Charger un programme informatique de découpe,
- Déposer la pièce initiale 2 sur un poste reprenant les guidages des étapes de découpe d'ébauchage et de découpe de finition d'ébauchage, c'est-à-dire les perçages de positionnement 80 et/ou le repère 83, et permettant de redéfinir une origine précise de la pièce initiale 2, prendre l'origine du montage,
- Préparer un fil de découpe et lancer le programme de découpe pour chaque pièce. Le programme de découpe doit permettre que les éventuelles libérations de contraintes dues à l'enlèvement de matière n'interviennent qu'en fin de cycle sur des zones de la pièce moins précises c'est-à-dire sans zones d'élastomère à tangenter et sans que des retraits d'élastomère n'engendrent des défauts de positionnement non compensés par le montage de positionnement,
- Découper les interfaces des deux matières,
- Enlever les morceaux découpés, éliminer les portions d'élastomère 9A et 9B, éliminer les scories en surface,
- Contrôler les pièces,
- Enregistrer les cotes exactes mesurées et les données de tolérances de chaque pièce finale 1.

De préférence l'invention comprend un ordre de découpe suivant :
- une première phase qui réalise la découpe aux interfaces entre la pièce initiale 2 et l'élastomère 5, c'est-à-dire au niveau du contact élastomère-aluminium de manière à garder un ensemble « rigide » tout en découpant les parties excédentaires d'élastomère, puis,
- une seconde phase qui réalise la découpe dans la pièce initiale 2, c'est-à-dire qui enlève les parties d'aluminium pour désolidariser l'ensemble.

L'étape de découpe de finition permet d'usiner au moins une cavité de jeu 8 dans la pièce initiale 2 et aussi de former les deux morceaux distincts 3, 4.

Cet ordre de découpe permet avantageusement, comme lors de l'étape de découpe dite d'ébauchage, d'éviter d'éventuelles déformations de la pièce par le phénomène de libérations de contraintes due à l'enlèvement de matière.

Plus particulièrement et en référence à la figure 4, l'étape de découpe de finition est réalisée de préférence dans l'ordre de découpe suivant, afin de limiter les contraintes (ou dans un autre ordre, de préférence de sorte d'alterner l'une après l'autre une découpe sur la moitié gauche de la figure 4 et une découpe sur la moitié droite de la figure 4) :
- Percer à travers toute la pièce 2, entre le plot d'élastomère 6A, la portion d'élastomère 9A et le futur morceau 3, et plus particulièrement aux abords du périmètre du plot d'élastomère 6A et d'une future plaque 10, afin de laisser un passage pour un fil de découpe dans le cas d'une découpe par électroérosion,
- Percer à travers toute la pièce 2, entre le plot d'élastomère 6B, la portion d'élastomère 9B et le futur morceau 3, et plus particulièrement aux abords du périmètre du plot d'élastomère 6B et de la future plaque 10, afin de laisser passer un fil de découpe dans le cas d'une découpe par électro-érosion,
- Percer à travers toute la pièce 2, entre le plot d'élastomère 6C, la couche d'élastomère 7A et le futur morceau 3, et plus particulièrement aux abords du périmètre du plot d'élastomère 6C et d'une future plaque 30, afin de laisser passer un fil de découpe dans le cas d'une découpe par électro-érosion,
- Percer à travers toute la pièce 2, entre le plot d'élastomère 6D, la couche d'élastomère 7B et le futur morceau 3, et plus particulièrement aux abords du périmètre du plot d'élastomère 6D et de la future plaque 30, afin de laisser passer un fil de découpe dans le cas d'une découpe par électro-érosion,
- Percer à travers toute la pièce 2, entre la portion d'élastomère 9A, la couche d'élastomère 7A et le futur morceau 4, afin de laisser passer un fil de découpe dans le cas d'une découpe par électro-érosion,
- Percer à travers toute la pièce 2, entre la portion d'élastomère 9B, la couche d'élastomère 7B et le futur morceau 4, afin de laisser passer un fil de découpe dans le cas d'une découpe par électro-érosion,
- Percer à travers toute la pièce 2, entre le plot d'élastomère 6C, la couche d'élastomère 7E et le futur morceau 3, afin de laisser passer un fil de découpe dans le cas d'une découpe par électro-érosion,
- Percer à travers toute la pièce 2, entre le plot d'élastomère 6D, la couche d'élastomère 7F et le futur morceau 3, afin de laisser passer un fil de découpe dans le cas d'une découpe par électro-érosion,
- Percer à travers toute la pièce 2, le long de la face gauche du plot d'élastomère 6A, afin de laisser passer un fil de découpe dans le cas d'une découpe par électro-érosion,
- Percer à travers toute la pièce 2, le long de la face droite du plot d'élastomère 6B, afin de laisser passer un fil de découpe dans le cas d'une découpe par électro-érosion,
- Puis découper la pièce de manière continue à l'interface entre la pièce initiale 2, c'est-à-dire l'aluminium, et l'élastomère 5 le long de la face droite du plot d'élastomère 6A puis le long de la partie supérieure de la portion d'élastomère 9A et enfin le long de la face supérieure de la cavité de couche 7A,
- Découper la pièce de manière continue à l'interface entre la pièce initiale 2, c'est-à-dire l'aluminium, et l'élastomère 5 le long de la face gauche du plot d'élastomère 6B puis le long de la partie supérieure de la portion d'élastomère 9B et enfin le long de la face supérieure de la cavité de couche 7B,
- Découper la pièce de manière continue à l'interface entre la pièce initiale 2, c'est-à-dire l'aluminium, et l'élastomère 5 le long de la face droite du plot d'élastomère 6C,
- Découper la pièce de manière continue à l'interface entre la pièce initiale 2, c'est-à-dire l'aluminium, et l'élastomère 5 le long de la face gauche du plot d'élastomère 6D,
- Découper la pièce de manière continue à l'interface entre la pièce initiale 2, c'est-à-dire l'aluminium, et l'élastomère 5 le long de la partie inférieure de la portion d'élastomère 9A, le long de la face gauche de la couche d'élastomère 7A et enfin le long de la face inférieure de la couche d'élastomère 7A,
- Découper la pièce de manière continue à l'interface entre la pièce initiale 2, c'est-à-dire l'aluminium, et l'élastomère 5 le long de la partie inférieure de la portion d'élastomère 9B, le long de la face droite de la couche d'élastomère 7B et enfin le long de la face inférieure de la couche d'élastomère 7B,
- Découper la pièce de manière continue à l'interface entre la pièce initiale 2, c'est-à-dire l'aluminium, et l'élastomère 5 le long de la face gauche du plot d'élastomère 6C, le long de la partie inférieure de la portion d'élastomère 9C, le long de la face droite de la couche d'élastomère 7E et enfin le long de la face supérieure de la couche d'élastomère 7C,
- Découper la pièce de manière continue à l'interface entre la pièce initiale 2, c'est-à-dire l'aluminium, et l'élastomère 5 le long de la face droite du plot d'élastomère 6D, le long de la partie inférieure de la portion d'élastomère 9D, le long de la face gauche de la couche d'élastomère 7F et enfin le long de la face supérieure de la couche d'élastomère 7D,
- Découper la pièce de manière continue à l'interface entre la pièce initiale 2, c'est-à-dire l'aluminium, et l'élastomère 5 le long de la face gauche du plot d'élastomère 6A,
- Découper la pièce de manière continue à l'interface entre la pièce initiale 2, c'est-à-dire l'aluminium, et l'élastomère 5 le long de la face droite du plot d'élastomère 6B,
- Découper la pièce initiale de manière continue entre la couche d'élastomère 7A et le plot d'élastomère 6A, afin de désolidariser une partie de la pièce initiale entre le plot d'élastomère 6A, la portion d'élastomère 9A et la future plaque 10.
- Découper la pièce initiale de manière continue entre la couche d'élastomère 7B et le plot d'élastomère 6B, afin de désolidariser une partie de la pièce initiale entre le plot d'élastomère 6B, la portion d'élastomère 9B et la future plaque 10,
- Découper la pièce initiale de manière continue entre la couche d'élastomère 7A, le plot d'élastomère 6C et la future plaque 30,
- Découper la pièce initiale de manière continue entre la couche d'élastomère 7B, le plot d'élastomère 6D et la future plaque 30,
- Découper la pièce initiale de manière continue entre le plot d'élastomère 6A et le plot d'élastomère 6C, de préférence dans le prolongement vertical des faces droites des plots d'élastomère 6A et 6C, afin de désolidariser une partie de la pièce initiale entre le plot d'élastomère 6C, le futur morceau 4 et plus précisément une future plaque 20, la portion d'élastomère 9A, la couche d'élastomère 7A et le futur morceau 3,
- Découper la pièce initiale de manière continue entre le plot d'élastomère 6B et le plot d'élastomère 6D, de préférence dans le prolongement vertical des faces gauches des plots d'élastomère 6B et 6D, afin de désolidariser une partie de la pièce initiale entre le plot d'élastomère 6D, le futur morceau 4 et plus précisément une future plaque 22, la portion d'élastomère 9B, la couche d'élastomère 7B et le futur morceau 3,
- Découper la pièce initiale 2 de manière continue de préférence dans le prolongement vertical de la face gauche du plot d'élastomère 6C le long de la face gauche du futur morceau 3 et plus précisément le long de la face gauche de la future plaque 30, puis découper dans une direction sensiblement horizontale sur une longueur au moins égale à la longueur de la couche d'élastomère 7C en vue de délimiter la face inférieure du futur morceau 3,
- Découper la pièce initiale de manière continue de préférence dans le prolongement vertical de la face droite du plot d'élastomère 6D le long de la face droite du futur morceau 3, puis découper dans une direction sensiblement horizontale sur une longueur au moins égale à la longueur de la couche d'élastomère 7D en vue de délimiter la face inférieure du futur morceau 3 ; de préférence la face inférieure du futur morceau 3 est plane et sans différence de niveau,
- Découper la pièce initiale 2 de manière continue de préférence dans le prolongement vertical de la face gauche de la couche d'élastomère 7D entre la face inférieure du morceau 3 et la face supérieure de la couche d'élastomère 7D, puis découper la pièce 2 entre les couches d'élastomère 7C et 7D, de préférence dans le prolongement de leur faces inférieures, puis découper la pièce 2 dans le prolongement vertical de la face droite de la couche d'élastomère 7C entre la face supérieure de la couche d'élastomère 7C et la face inférieure du futur morceau 3, puis finir de découper le long de la face inférieure du futur morceau 3,
- Découper la pièce 2 de manière continue le long de la face gauche de la futur plaque 10 du futur morceau 3, de préférence dans le prolongement de la face gauche du plot d'élastomère 6A, puis découper la face supérieure du futur morceau 3 selon la forme souhaitée, puis la face droite de la futur plaque 10 du futur morceau 3, de préférence dans le prolongement de la face droite du plot d'élastomère 6B,
- Découper la pièce 2 de manière continue le long la face gauche du futur morceau 4 et plus précisément le long de la face gauche d'un premier bord 50, en partant de la face gauche du plot d'élastomère 6A, puis découper la face inférieure du futur morceau 4 selon la forme souhaitée et enfin découper la face droite du futur morceau 4, et plus précisément le long de la face droite du deuxième bord 51, en arrivant à la face droite du plot 6B.

De préférence, le fil de découpe est de diamètre 0,3mm. Ce diamètre peut être augmenté en cas de casse intempestive. Par exemple le diamètre de fil de découpe peut être compris entre 0,3 et 0,4mm. Le fil de découpe peut être en cuivre avec gainage de protection. En outre, la vitesse d'avance du fil de découpe doit être réduite à 0,1mm/min dans les zones où le fil tangente l'élastomère 5, du fait de la résistance à l'avancement que constitue l'élastomère 5. Le fil de découpe doit être en appui fort sur l'élastomère dans les zones où il y a présence d'élastomère, cet appui est de l'ordre de 0,1 mm plus ou moins 10% mais est à ajuster en fonction de la hauteur à découper.

Les opérations de découpe de la pièce initiale 2 sont possibles car le fil de découpe est inséré au niveau des extrémités de découpe lors des découpes des interfaces entre la pièce initiale 2 et l'élastomère 5 réalisées précédemment.

Selon un aspect avantageux du procédé décrit, le matériau conducteur des morceaux 3, 4 est intimement lié au polymère 5. Lors de la découpe, ce matériau conducteur est quasi totalement concerné par l'érosion du fil sauf une faible partie de sa circonférence qui est en appui sur le polymère 5 et ainsi le débarrasse de toute trace du matériau conducteur par raclage. Ce procédé de fabrication permet de réaliser des pièces dont la forme devient partie intégrante de l'outillage de moulage, et dont les futurs différents éléments ne forment qu'une seule pièce finale 1. On obtient une précision maximale, le procédé n'étant pas dépendant de systèmes de localisation à l'intérieur du moule. Les moules sont également plus simples à réaliser si bien que certaines formes sont uniquement réalisables avec ce nouveau procédé de fabrication.

Une fois ces étapes réalisées, et en référence à la figure 5, la pièce finale 1 est obtenue avec deux morceaux métalliques 3, 4 distincts et quatre plots d'élastomère 6A, 6B, 6C et 6D parfaitement découpés et libérés de la liaison avec l'aluminium. En outre les couches d'élastomère 7A, 7B, 7C, 7D, 7E, 7F sont insérées dans l'au moins une cavité de jeu 8, chaque couche 7A, 7B, 7C, 7D, 7E, 7F étant en contact d'un seul morceau parmi les deux morceaux 3, 4 désormais distincts et étant situées entre les deux morceaux distincts 3, 4. Selon le mode de réalisation représenté sur la figure 5. La pièce finale 1 présentant l'au moins une cavité de jeu 8 est agencée pour, une fois la pièce initiale 2 découpée, permettre un déplacement des deux morceaux distincts 3, 4 l'un par rapport à l'autre par déformation de l'élastomère 5.

Enfin une étape de traitement final prévoit d'appliquer un traitement de surface qui donnera une résistance à la pièce finale 1 contre l'oxydation.

Ainsi, la pièce finale 1 est réalisée au moins selon les étapes suivantes :
- une insertion d'un élastomère 5 dans au moins une cavité d'insertion 6 d'une pièce initiale 2 de sorte que l'élastomère 5 soit en contact et solidaire de la pièce initiale 2, puis,
- une découpe de la pièce initiale 2 en au moins deux morceaux distincts 3, 4, de sorte que les au moins deux morceaux distincts 3, 4 sont solidaires mais ne sont pas en contact, les au moins deux morceaux distincts 3, 4 étant reliés entre eux par l'élastomère 5.

Selon le mode de réalisation du procédé décrit, les problèmes de positionnement relatif entre les morceaux 3 et 4 sont supprimés, puisque ces morceaux 3 et 4 étaient solidaires dans la pièce initiale 2 avant d'être séparés pour l'obtention de la pièce finale 1.

On va maintenant décrire, en référence aux figures 5 à 7, un exemple de pièce finale 1 obtenue à partir du procédé ci-dessus.

L'exemple de réalisation est un amortisseur 1 comprenant :
- un ensemble se décomposant sur trois plans superposés, dont un premier plan 11, un deuxième plan 21 situé au-dessous du premier plan 11, et un troisième plan 31 situé au-dessous du deuxième plan 21, cet ensemble comprenant :
   - une plaque 10 s'étendant dans le premier plan 11,
   - une première plaque 20 et une deuxième plaque 22 s'étendant dans le deuxième plan 21, ces deux plaques 20, 22 n'étant pas en contact l'une avec l'autre, et
   - une plaque 30 s'étendant dans le troisième plan 31,
- quatre plots 6A, 6B, 6C, 6D en élastomère, dont :
   - un plot 6A reliant la plaque 10 du premier plan 11 avec la première plaque 20 du deuxième plan 21,
   - un plot 6B reliant la plaque 10 du premier plan 11 avec la deuxième plaque 22 du deuxième plan 21,
   - un plot 6C reliant la plaque 30 du troisième plan 31 avec la première plaque 20 du deuxième plan 21, et
   - un plot 6D reliant la plaque 30 du troisième plan 31 avec la deuxième plaque 22 du deuxième plan 21.

L'amortisseur 1 est réalisé de façon à ce que la plaque 10 du premier plan 11 et la plaque 30 du troisième plan 31 sont reliées par un élément de liaison 3A s'étendant à travers le deuxième plan 21, cet élément de liaison 3A s'étendant perpendiculairement au deuxième plan 21 ; l'élément de liaison 3A s'étend alors entre la première plaque 20 du deuxième plan 21 et la deuxième plaque 22 du deuxième plan 21. De cette manière, l'amortisseur 1 est tel que la plaque 10 du premier plan 11, la plaque 30 du troisième plan 31 et l'élément de liaison 3A constituent une unique pièce 3 (appelée plus haut morceau 3) d'un même matériau.

L'élément de liaison 3A est recouvert :
- d'une couche d'élastomère 7A située entre l'élément de liaison 3A et la première plaque 20 du deuxième plan 21, et
- d'une couche d'élastomère 7B située entre l'élément de liaison 3A et la deuxième plaque 22 du deuxième plan 21.

Cependant, l'élément de liaison 3A n'est en contact avec aucun des quatre plots 6A, 6B, 6C, 6D.

De plus aucune des couches d'élastomère 7A, 7B n'est en contact d'un des quatre plots 6A, 6B, 6C, 6D ou de la première plaque 20 du deuxième plan 21 ou de la deuxième plaque 22 du deuxième plan 21.

Selon l'invention pour chacun des quatre plots 6A, 6B, 6C, 6D, le volume de chaque plot est égal à un même volume de référence plus ou moins 1%. De même, pour chacun des quatre plots 6A, 6B, 6C, 6D, l'aire d'un plot en contact avec une des plaques est égale à une même aire de référence plus ou moins 1%.

Selon un mode de réalisation préféré, il n'y a pas de continuité de matière entre :
- la plaque 10 du premier plan 11 et n'importe quelle plaque 20, 22 du deuxième plan 21, et
- la plaque 30 du troisième plan 31 et n'importe quelle plaque 20, 22 du deuxième plan 21.

L'amortisseur 1 comprend donc cet ensemble, qui se décompose en outre sur un quatrième plan 41 d'où s'étend au moins une plaque 40, de sorte que :
- la plaque 40 du quatrième plan 41 est reliée avec la première plaque 20 du deuxième plan 21 par un premier bord 50 qui traverse le troisième plan 31,
- la plaque 40 du quatrième plan 41 est reliée avec la deuxième plaque 22 du deuxième plan 21 par un deuxième bord 51 qui traverse le troisième plan 31.

De plus la plaque 40 du quatrième plan 41, la première plaque 20 du deuxième plan 21, la deuxième plaque 22 du deuxième plan 21, le premier bord 50 et le deuxième bord 51 constituent une unique pièce 4 (appelée plus haut morceau 4) d'un même matériau métallique. L'amortisseur est agencé de sorte que chaque plaque est une plaque métallique, de préférence en aluminium. Le volume des uniques pièces 3, 4 (appelées plus haut morceaux 3, 4) est de l'ordre de 2500 cm³.

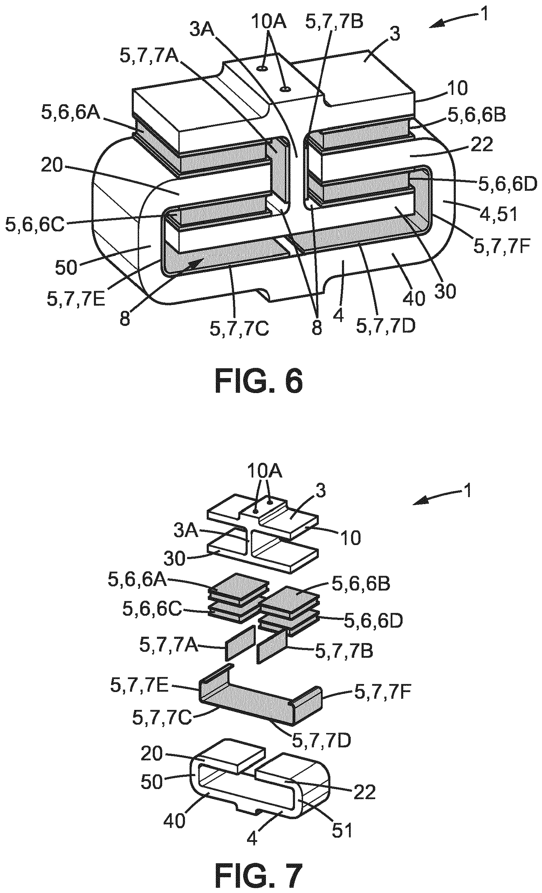

En outre, l'amortisseur 1 peut comprendre :
- pour chaque bord parmi le premier bord 50 et le deuxième bord 51 respectivement une couche d'élastomère 7E, 7F située entre ce bord 50, 51 et la plaque 30 du troisième plan 31, et
- une couche d'élastomère 7C, 7D située entre la plaque 40 du quatrième plan 41 et la plaque 30 du troisième plan 31. Selon le mode de la réalisation représenté aux figures 5 et 7, les couches d'élastomère 7C et 7D sont confondues.

Les couches d'élastomère 7C, 7D, 7E, 7F sont exclusivement en contact de l'une ou l'autre des uniques pièces 3, 4 de préférence 4. Il existe une cavité de jeu 8 entre les uniques pièces 3, 4, ladite cavité de jeu 8 étant agencée pour permettre un déplacement des uniques pièces 3, 4 l'une par rapport à l'autre par déformation de l'élastomère 5.

Les couches d'élastomère 7A, 7B servent à protéger respectivement les plaques 20, 22 lorsque celles-ci se déplacent relativement par rapport à la pièce 3 par déformation des plots 6A, 6B, 6C et 6D. De même les couches d'élastomère 7C, 7D, 7E, 7F servent à protéger la plaque 30 par rapport aux premier et deuxième bords 50, 51 et la plaque 40 lorsque celle-ci se déplace relativement par rapport à la pièce 4 par déformation des plots 6A, 6B, 6C et 6D.

En outre en référence aux figures 4, 6 et 7, la plaque 10 comprend au moins un taraudage 10A agencé pour accrocher l'amortisseur 1 à un autre dispositif. De même en référence à la figure 4, la plaque 40 comprend au moins un taraudage 40A agencé pour accrocher l'amortisseur 1 à un autre dispositif.

Bien sûr, l'invention n'est pas limitée aux exemples qui viennent d'être décrits et de nombreux aménagements peuvent être apportés à ces exemples sans sortir du cadre de l'invention.

Par exemple, le procédé de fabrication d'une pièce finale comprenant plusieurs matériaux de natures différentes est envisagé avec d'autres matériaux, conducteurs ou non-conducteurs. Dans le cas d'une absence de conduction électrique, on utilise des techniques de découpe par laser(s) et/ou par jet(s) d'eau et/ou par fraisage ou tout autre moyen.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier, toutes les variantes et modes de réalisation décrits précédemment sont combinables entre eux.

## Revendications

1. Procédé de fabrication d'une pièce finale comprenant plusieurs matériaux, la pièce finale étant réalisée au moins selon les étapes suivantes :
- une insertion d'un élastomère (5) dans au moins une cavité d'insertion (6) d'une pièce initiale (2) de sorte que l'élastomère (5) soit en contact et solidaire de la pièce initiale (2), puis, le procédé se **caractérise par**
- une découpe de la pièce initiale (2) en au moins deux morceaux distincts (3, 4), de sorte que les au moins deux morceaux distincts (3, 4) sont solidaires mais ne sont pas en contact, les au moins deux morceaux distincts (3, 4) étant reliés entre eux par l'élastomère (5).

2. Procédé de fabrication selon la revendication 1, **caractérisé en ce que** la pièce finale présente au moins une cavité de jeu (8) agencée pour, une fois la pièce initiale (2) découpée, permettre un déplacement des deux morceaux distincts (3, 4) l'un par rapport à l'autre par déformation de l'élastomère (5).

3. Procédé de fabrication selon la revendication précédente, **caractérisé en ce que** l'au moins une cavité de jeu (8) est usinée dans la pièce initiale (2) après l'insertion de l'élastomère (5).

4. Procédé de fabrication selon la revendication 2 ou 3, **caractérisé en ce que** des couches d'élastomère (7A, 7B, 7C, 7D, 7E, 7D) sont insérées dans l'au moins une cavité de jeu (8), chaque couche étant en contact d'un seul morceau parmi les deux morceaux distincts (3, 4) et étant situées entre les deux morceaux distincts (3, 4).

5. Procédé de fabrication selon la revendication précédente, **caractérisé en ce que** les couches d'élastomère (7A, 7B, 7C, 7D, 7E, 7D) sont obtenues par insertion de l'élastomère (5) dans des cavités de couches (7).

6. Procédé de fabrication selon la revendication précédente, **caractérisé en ce que** chaque cavité de couche (7) est reliée à une cavité d'insertion (6) par un canal (9) permettant un passage d'élastomère (5) entre ces deux cavités lors de l'insertion de l'élastomère (5) dans l'une de ces deux cavités.

7. Procédé de fabrication selon l'une quelconque des revendications précédentes, **caractérisé en ce qu'**il comprend en outre une découpe aux interfaces entre la pièce initiale (2) et l'élastomère (5).

8. Procédé de fabrication selon la revendication 7, **caractérisé en ce qu'**il comprend :
- la découpe aux interfaces entre la pièce initiale (2) et l'élastomère (5), puis,
- la découpe dans la pièce initiale (2).

9. Procédé de fabrication selon l'une quelconque des revendications précédentes, **caractérisé en ce que** la découpe s'effectue par électro-érosion par un fil.

10. Procédé de fabrication selon l'une quelconque des revendications précédentes, **caractérisé en ce que** la pièce initiale (2) est formée par un matériau conducteur.

11. Procédé de fabrication selon l'une quelconque des revendications précédentes, **caractérisé en ce que** l'élastomère (5) comprend du caoutchouc naturel.

12. Procédé de fabrication selon l'une quelconque des revendications précédentes, **caractérisé en ce que** l'élastomère (5) est moulé dans la pièce initiale (2).

13. Procédé de fabrication selon l'une quelconque des revendications précédentes, **caractérisé en ce que** l'élastomère (5) est inséré dans au moins quatre cavités d'insertion (6) distinctes.

14. Procédé de fabrication selon l'une quelconque des revendications 5 à 13, **caractérisé en ce que** toutes les surfaces des cavités d'insertion (6) et des cavités de couche (7) sont traitées pour favoriser le lien entre l'élastomère (5) et le ou les morceaux distincts (3, 4).

15. Procédé de fabrication selon l'une quelconque des revendications précédentes, **caractérisé en ce que** les cavités sont des trous usinés à travers toute la pièce initiale (2).

## Patentansprüche

1. Verfahren zur Herstellung einer Endkomponente mit einer Vielzahl von Materialien, wobei die Endkomponente mindestens mit den folgenden Verfahrensschritten ausgeführt wird:
- Einfügen eines Elastomers (5) in zumindest einen Einfügungshohlraum (6) einer Anfangskomponente (2), so dass das Elastomer (5) mit der Anfangskomponente (2) in Kontakt steht und fest verbunden ist, wobei das Verfahren **gekennzeichnet ist durch**
- Zuschneiden der Anfangskomponente (2) in mindestens zwei voneinander getrennte Teile (3, 4), so dass die mindestens zwei voneinander getrennten Teile (3, 4) fest verbunden sind, aber nicht in Kontakt stehen, wobei die mindestens zwei voneinander getrennten Teile (3, 4) untereinander **durch** das Elastomer (5) verbunden sind.

2. Herstellungsverfahren nach Anspruch 1, **dadurch gekennzeichnet, dass** die Endkomponente mindestens einen Spielhohlraum (8) aufweist, der so ausgebildet ist, dass er, nachdem die Anfangskomponente (2) zugeschnitten wurde, eine Verschiebung der beiden voneinander getrennten Teile (3, 4) relativ zueinander durch Verformung des Elastomers (5) ermöglicht.

3. Herstellungsverfahren nach dem vorhergehenden Anspruch, **dadurch gekennzeichnet, dass** der mindestens eine Spielhohlraum (8) nach der Einfügung des Elastomers (5) in die Anfangskomponente (2) eingearbeitet wird.

4. Herstellungsverfahren nach Anspruch 2 oder 3, **dadurch gekennzeichnet, dass** elastomere Schichten (7A, 7B, 7C, 7D, 7E, 7D) in dem mindestens einen Spielhohlraum (8) eingebettet sind, wobei jede Schicht mit einem einzelnen Teil der beiden voneinander getrennten Teile (3, 4) in Kontakt steht und zwischen den beiden voneinander getrennten Teilen (3, 4) angeordnet ist.

5. Herstellungsverfahren nach dem vorhergehenden Anspruch, **dadurch gekennzeichnet, dass** die elastomeren Schichten (7A, 7B, 7C, 7D, 7E, 7D) durch Einfügung des Elastomers (5) in Schichthohlräume (7) erhalten werden.

6. Herstellungsverfahren nach dem vorhergehenden Anspruch, **dadurch gekennzeichnet, dass** jeder Schichthohlraum (7) mit einem Einfügungshohlraum (6) durch einen Kanal (9) verbunden ist, so dass ein Durchgang des Elastomers (5) zwischen diesen beiden Hohlräumen beim Einfügen des Elastomers (5) in einen dieser beiden Hohlräume ermöglicht wird.

7. Herstellungsverfahren nach einem der vorhergehenden Ansprüche, **dadurch gekennzeichnet, dass** es ferner einen Zuschnitt in den Schnittstellen zwischen der Anfangskomponente (2) und dem Elastomer (5) umfasst.

8. Herstellungsverfahren nach Anspruch 7, **dadurch gekennzeichnet, dass** es umfasst:
- den Zuschnitt in den Schnittstellen zwischen der Anfangskomponente (2) und dem Elastomer (5), und anschließend,
- den Schnitt in die Anfangskomponente (2).

9. Herstellungsverfahren nach einem der vorhergehenden Ansprüche, **dadurch gekennzeichnet, dass** der Zuschnitt durch Elektroerosion mit einem Draht erfolgt.

10. Herstellungsverfahren nach einem der vorhergehenden Ansprüche, **dadurch gekennzeichnet, dass** die Anfangskomponente (2) aus einem leitenden Material gebildet ist.

11. Herstellungsverfahren nach einem der vorhergehenden Ansprüche, **dadurch gekennzeichnet, dass** das Elastomer (5) Naturkautschuk aufweist.

12. Herstellungsverfahren nach einem der vorhergehenden Ansprüche, **dadurch gekennzeichnet, dass** das Elastomer (5) in der Anfangskomponente (2) gebildet wird.

13. Herstellungsverfahren nach einem der vorhergehenden Ansprüche, **dadurch gekennzeichnet, dass** das Elastomer (5) in mindestens vier verschiedene Einfügungshohlräume (6) eingefügt wird.

14. Herstellungsverfahren nach einem der Ansprüche 5 bis 13, **dadurch gekennzeichnet, dass** alle Oberflächen der Einfügungshohlräume (6) und der Schichthohlräume (7) behandelt wurden, um die Verbindung zwischen dem Elastomer (5) und dem oder den voneinander getrennten Teilen (3, 4) zu fördern.

15. Herstellungsverfahren nach einem der vorhergehenden Ansprüche, **dadurch gekennzeichnet, dass** es sich bei den Hohlräumen um Öffnungen handelt, die über die gesamte Anfangskomponente (2) eingearbeitet sind.

## Claims

1. A method of manufacturing a final piece comprising several materials, the final piece being performed at least according to the steps of:
- inserting an elastomer (5) in at least one insertion cavity (6) of an initial piece (2) so that the elastomer (5) is in contact and fixed with the initial piece (2), then, the method is **characterized in**
- cutting the initial piece (2) in at least two distinct parts (3, 4), so that the at least two distinct parts (3, 4) are fixed together but are not in contact with each other, the at least two distinct parts (3, 4) being connected to each other by the elastomer (5).

2. Method of manufacturing according to claim 1, **characterized in that** the final piece shows at least one clearance cavity (8) arranged to, once the initial piece (2) is cut, allow a movement of the two distinct parts (3, 4) relative to each other by deformation of the elastomer (5).

3. Method of manufacturing according to the previous claim, **characterized in that** the at least one clearance cavity (8) is machined into the initial piece (2) after inserting the elastomer (5).

4. Method of manufacturing according to claim 2 or 3, **characterized in that** elastomer layers (7A, 7B, 7C, 7D, 7E, 7D) are inserted in the at least one clearance cavity (8), each layer being in contact with one single part of the two distinct parts (3, 4) and being located between the two distinct parts (3, 4).

5. Method of manufacturing according to the previous claim, **characterized in that** the elastomer layers (7A, 7B, 7C, 7D, 7E, 7D) are obtained by inserting the elastomer (5) in layer cavities (7).

6. Method of manufacturing according to the previous claim, **characterized in that** each layer cavity (7) is connected to an insertion cavity (6) by a channel (9) allowing a passage of the elastomer (5) between these two cavities when inserting the elastomer (5) in one of these two cavities.

7. Method of manufacturing according to any of the previous claims, **characterized in that** it further comprises a cut at the interfaces between the initial piece (2) and the elastomer (5).

8. Method of manufacturing according to claim 7, **characterized in that** it comprises:
- cutting at the interfaces between the initial piece (2) and the elastomer (5), then,
- cutting into the initial piece (2).

9. Method of manufacturing according to any of the previous claims, **characterized in that** cutting is performed by wire electroerosion.

10. Method of manufacturing according to any of the previous claims, **characterized in that** the initial piece (2) is formed by a conductive material.

11. Method of manufacturing according to any of the previous claims, **characterized in that** the elastomer (5) comprises natural rubber.

12. Method of manufacturing according to any of the previous claims, **characterized in that** the elastomer (5) is moulded into the initial piece (2).

13. Method of manufacturing according to any of the previous claims, **characterized in that** the elastomer (5) is inserted into at least four distinct insertion cavities (6).

14. Method of manufacturing according to any of claims 5 to 13, **characterized in that** all the surfaces of the insertion cavities (6) and of the layer cavities (7) are treated in order to improve the link between the elastomer (5) and the distinct part or parts (3, 4).

15. Method of manufacturing according to any of the previous claims, **characterized in that** the cavities are holes machined across the entire initial piece (2).
